Europäisches Patentamt

European Patent Office

Office européen des brevets

(11) Publication number: **0 445 747 A1**

# EUROPEAN PATENT APPLICATION

(21) Application number: **91103345.4**

(22) Date of filing: **06.03.91**

(51) Int. Cl.5: **B60Q 1/50**

(30) Priority: **09.03.90 IL 93692**

(43) Date of publication of application:
**11.09.91 Bulletin 91/37**

(84) Designated Contracting States:
**DE FR GB NL SE**

(71) Applicant: **Drutman, Moshe**
**8 Ha'avoda Str.**
**Ramat Hasharon(IL)**

(72) Inventor: **Drutman, Moshe**
**8 Ha'avoda Str.**
**Ramat Hasharon(IL)**

(74) Representative: **Dragotti, Gianfranco et al**
**SAIC BREVETTI s.r.l. Viale Bianca Maria, 15**
**I-20122 Milano(IT)**

(54) **Safety device for motor vehicles.**

(57) A safety device for motor vehicles alerts the driver of a trailing vehicle when the distance between the vehicles is shorter than a predetermined safe stopping distance. The device comprises reflecting members, separated by spacings corresponding to the resolving power of the eye, which merge together when the safe stopping distance is reached.

FIG 3

EP 0 445 747 A1

## Field of the Invention

The present invention relates to a safety device for motor vehicles, and particularly to a safety device to alert the driver of a trailing vehicle whether or not the trailing vehicle is at a predetermined safe stopping distance behind the vehicle carrying the safety device.

## Background of the Invention

As is well known, rear-end collisions by failure to maintain a safe stopping distance behind a vehicle represent a very high percentage of traffic accidents. Many devices have been proposed to alert drivers of a trailing vehicle when the safe stopping distance is not being maintained. However, the art has so far failed to provide a safety device which is both simple in installation and use, and inexpensive.

## The Prior Art

Some proposed devices are based on an echo system for continuously measuring the distance between the trailing and leading vehicles. Other systems are based on optical arrangements to provide an optical indication of the distance between the two vehicles. Examples of the latter systems include U.S. Patents 2,330,561 and 3,868,629, both of which include lighting devices which illuminate windows spaced apart a distance corresponding to the resolving power of the eye at a predetermined distance corresponding to a predetermined vehicle velocity, such that the individual windows appear to merge together when viewed at a distance greater than the predetermined safe stopping distance, but become distinguishable from each other at a distance less than the predetermined safe stopping distance.

It is an object of the present invention to provide a safety device for alerting the driver that the safe stopping distance is not being maintained, which is of simple construction and which can be supplied in large quantities and at low cost.

It is another object of the invention to provide a safety device which can be easily installed and which does not require complicated and expensive equipment and connections.

According to the present invention, there is provided a safety device for motor vehicles to alert the driver of a trailing vehicle whether or not the trailing vehicle is at a predetermined safe stopping distance behind the vehicle carrying the safety device, for a predetermined vehicle velocity. The safety device according to the invention comprises light reflecting means attachable to the motor vehicle for viewing by the driver of the trailing vehicle. By reflecting means it is meant to indicate means having surfaces which do not substantially absorb light, and which are therefore visible when exposed to light, be it artificial or daylight or the headlights of the trailing or other vehicle. The reflecting means may include - but are not limited to - reflector members, such as those made of materials commonly employed to provide rear reflectors of vehicles.

The reflecting means comprise one or more spacings, which may be spacings provided between two adjacent reflecting elements of the reflecting means, or which may be a gap provided within a single reflecting element, between two different portions thereof.

According to the invention, the said spacing corresponds to the resolving power of the eye at the predetermined safe stopping distance for the predetermined vehicle velocity, such that the individual reflecting elements or segments thereof merge together and are not distinguishable from each other by the driver of the trailing vehicle when at a distance greater than the safe stopping distance, but are distinguishable from each other when the trailing vehicle is at a distance less than the predetermined safe stopping distance.

According to a preferred embodiment of the invention, the reflecting elements, when distinguishable, have a specific shape, such as a figure or a written message. In one preferred embodiment of the invention, the written message specifies the predetermined vehicle velocity for which the spacing has been preset.

As will be apparent to a skilled person, the resolving power of the eye may differ from one driver to the other, and appropriate safety limits can be provided, to insure that the minimal safe distance is maintained in most cases.

According to the preferred embodiment of the invention described below, the safety device includes two (or more) reflecting elements spaced from each other by spacing which corresponds to the resolving power of the eye at a predetermined distance each for different predetermined vehicle velocities, such that when the driver of the trailing vehicle is capable of distinguishing the reflecting elements of one of the two reflecting members, he is alerted that he is less than the predetermined safe stopping distance for the predetermined vehicle velocity.

For example, assuming that the speed limit within built-up areas is 50 Km/Hr and in non-built-up areas is 90 Km/Hr, the safety device could include two reflecting members, one having reflecting elements which, when merged together, specify the speed limit "50 Km/Hr", and the other having reflecting elements which, when merged together, specify the speed limit "90 Km/Hr". The reflecting elements for the "90 Km/Hr" member should be spaced apart a distance within the range of 9-11 mm, preferably about 10.35 mm, and for the "50 Km/Hr" member in the range 2.75-4.00, preferably about 3.5 mm.

According to another preferred embodiment of the invention, the specific shape is visible when the gaps or spacings disappear, and becomes unclear when the resolving power of the eye is sufficient to distinguish the said spacings. This is easily done by providing gaps in the predetermined shape, so as to render it unclear due to the missing areas. Thus, as long as the driver of the trailing vehicle clearly distinguishes the picture or message made of the reflecting elements, this signifies that the safety distance is maintained. The moment that the figure or message becomes indistinct, the driver is immediately alerted that the distance has become too short.

It will thus be seen that the safety device in accordance with the present invention is of a very simple construction which can be manufactured at low cost and according to specific safety requirements and standards, so as to alert a vehicle driver when the vehicle is traveling at an unsafe stopping distance behind another vehicle.

Further features and advantages of the invention will become apparent from the description below.

The invention is herein described, by way of example only, with reference to the accompanying drawings, wherein:

## Brief Description of the Drawings

- Fig. 1 is a diagram helpful in explaining the basic concept involved in the present invention;
- Fig. 2 is a graph illustrating the relationship between the distances for various vehicle speeds with respect to the resolving power of the human eye;
- Fig. 3 illustrates one form of safety device constructed in accordance with the present invention applied to a vehicle;
- Figs. 4a and 4b illustrate the two reflector members of the safety device of Fig. 3;
- Fig. 5 more particularly illustrates the dimensional relationship of the reflector elements in the reflector member of Fig. 4a; and
- Fig. 6 illustrates a safety device according to another preferred embodiment of the invention.

## DETAILED DESCRIPTION OF PREFERRED EMBODIMENTS

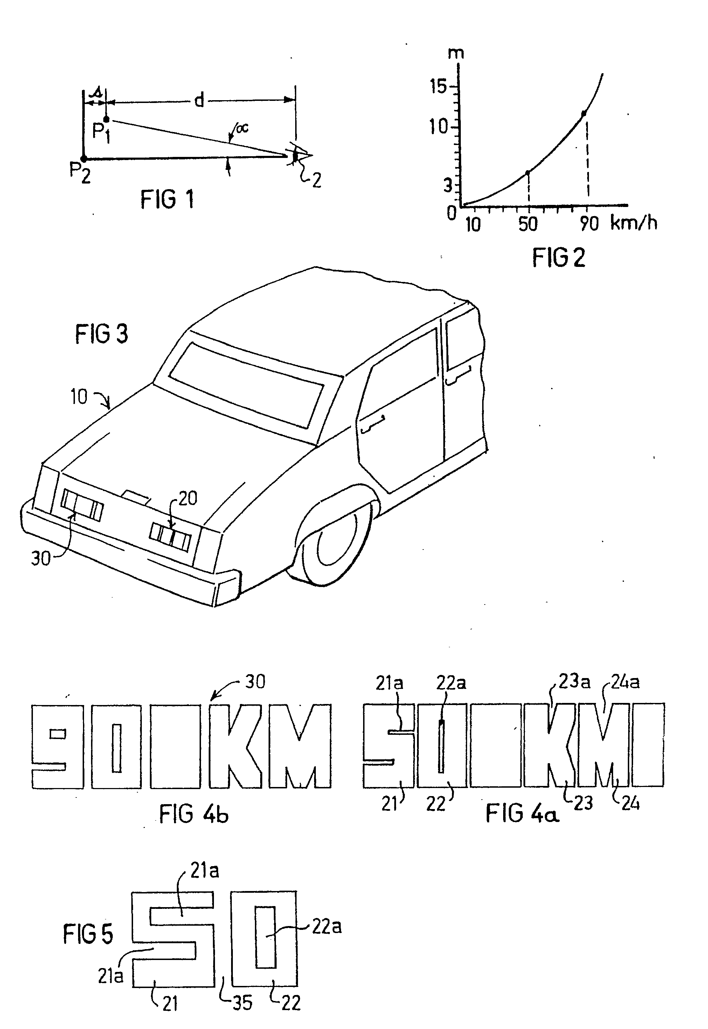

Reference is first made to Fig. 1 illustrating the basic concept on which the present invention is based. Thus, for a given distance "d", at which an observer 2 is spaced from two spaced points $P_1$ and $P_2$, the two points will merge into one and will be indistinguishable from each other because of the resolving power of the human eye. The distance "d" depends on both the spacing "s" between the two points $P_1$, $P_2$, and also on the resolution angle a between the diverging lines extending from the eye 2 to the two points $P_1$, $P_2$. Thus, when the viewer sees the two points $P_1$, $P_2$ merged together, this provides an indication to the viewer that he is located at a distance greater than distance "d"; but when the two points $P_1$, $P_2$, are separately distinguishable, this provides an indication that the viewer is at a distance from the two points less than the distance "d".

This phenomenon is exploited by the present invention in the following manner:

Assuming (which is the case in Israel) the permitted vehicle speed is 50 Km/Hr in built-up areas, and 90 Km/Hr in non-built-up areas, the safe stopping distance when traveling 50 Km/Hr would be about 30 meters, and would be about 90 meters when traveling at 90 Km/Hr. If the separation angle α is assumed to be about 1 degree, the two points $P_1$, $P_2$ are in the form of reflecting elements of a reflecting member, which elements merge together when the viewer 2 is at a distance greater than "d". In such an application, it is preferred to have the spacing "s" between the two reflecting elements at points $P_1$, $P_2$ spaced apart a distance within the range of 2.75-4.00 mm, preferably about 3.35 mm (to take into account variations in the resolution power among different persons) to indicate the safe stopping distance (30 meters) when traveling at 50 Km/Hr; and a spacing "s" within the range of 9-11 mm to indicate the safe stopping distance of 90 meters when traveling at a speed of 90 Km/Hr.

Fig. 2 is a graph illustrating the relationship of the spacing "s" between the reflector elements to indicate safe stopping distances at different vehicle speeds. It will be seen that the safe stopping distance, and thereby the spacing "s" between the reflector elements, is not linearly related to the vehicle speed, but rather increases according to the second power of the vehicle speed. The skilled person will be able to provide appropriate spacings for specific speeds and reflecting members.

Fig. 3 illustrates a vehicle 10 equipped with a safety device constructed in accordance with the present invention, as more particularly illustrated in Figs. 4a and 4b. In the example shown in these figures, the safety device comprises two reflecting members 20, 30. Reflecting member 20 is more particularly illustrated in Fig. 4a and is used for indicating whether the trailing vehicle is traveling at a safe stopping distance within a built-up area where the speed limit is 50 Km/Hr. Reflecting member 30 illustrated in Fig. 4b is used for indicating to the driver whether the vehicle is traveling at a safe stopping distance in a non-built-up area where the speed limit is 90 Km/Hr.

Thus, as shown in Fig. 4a, reflecting member 20 includes a plurality of reflecting elements 21, 22, 23 and 24 which, when individually distinguishable, specify "50 KM".

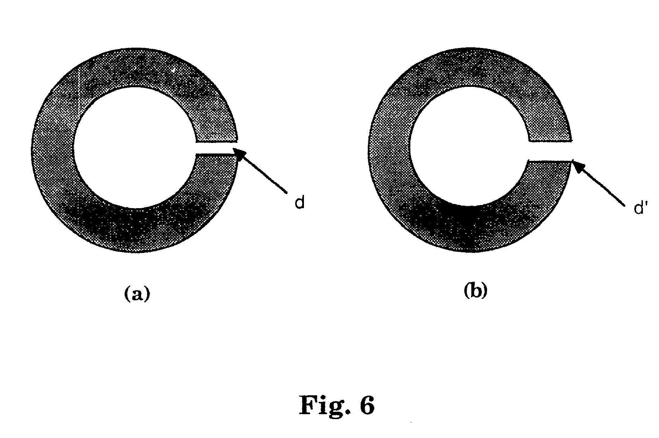

Fig. 5 more particularly illustrates the spacing between the characters, particularly between the two numbers "5" and "0", and the spacing between the elements of those two numbers. Thus, as shown in Fig. 5, the number "5" is spaced from the number "0" by space 35 which is within the above-mentioned range of 2.75-4.00 mm, preferably about 3.45 mm, to indicate a safe stopping distance of 30 meters when traveling 50 Km/Hr. Thus, when the driver of the trailing vehicle sees the "5" and "0" as merged together so as to be non-distinguishable, he knows that he is at a distance greater than the safe stopping distance for a speed of 50 Km/Hr; but when the individual reflecting elements constituting the "50" can be recognized, he is alerted to the fact that he is at less than the safe stopping distance for that speed.

Reflecting member 30 is similarly constructed as reflecting member 20, but to specify the speed of 90 Km/Hr, and therefore the spaces between the reflector elements would be at a greater distance. Thus, in the example illustrated in Fig. 4b, specifying the speed of 90 Km/Hr, the spacing between the reflecting elements is within the range of 9-11 mm, preferably about 10.35 mm.

It will thus be seen that the driver of a trailing vehicle, by merely observing whether the reflecting elements of the two reflecting members 20, 30 are individually indistinguishable so as to enable recognition of the number displayed by the reflecting elements, is immediately informed whether or not his vehicle is traveling at the safe stopping distance for the respective speed displayed.

Fig. 6 schematically illustrates a device according to another preferred embodiment of the invention. This device consists of a ring, as shown for instance in Fig. 6(a), in which a gap "d" has been provided. The ring then constitutes the reflecting member, and the gap d is the spacing which disappears when the predetermined safe stopping distance is reached.

Fig. 6 also schematically shows two different elements, having spacings preset for different speeds. The device of Fig. 6(b) is intended for higher speeds than that of Fig. 6(a), and therefore spacing d' is wider than spacing d.

While the invention has been described with respect to preferred embodiments, it will be appreciated that many variations may be made. For example, only one speed may be displayed by the reflecting elements, or more than two speeds may be displayed. In addition, different speeds may be displayed, e.g., according to the speed limits at various localities, with the reflecting members for each displayed speed being spaced from each other according to the safe stopping distance for that speed, or different written messages or figures can be displayed. Furthermore, as explained above, the figure or message may be constructed so as to become distinguishable when the reflecting elements merge and the gaps become indistinct. Also, the reflecting member or members could be mounted on a supporting strip, board, triangle or other support.

Many other variations, modifications and applications of the invention will be apparent.

## Claims

1. A safety device for motor vehicles to alert the driver of a trailing vehicle whether or not the trailing vehicle is at a predetermined safe stopping distance behind the vehicle carrying the safety device for a predetermined vehicle velocity, said safety device comprising:
   - light reflecting members comprising one or more spacings provided between two adjacent reflecting elements of the reflecting means, and/or consisting of a gap or gaps provided within a single reflecting element and between two portions thereof, the said spacing corresponding to the resolving power of the eye at said predetermined safe stopping distance for the predetermined vehicle velocity, such that the individual reflecting elements merge together and are not distinguishable from each other by the driver of the trailing vehicle when at a distance greater than the said safe stopping distance, but are distinguishable from each other when the trailing vehicle is at a distance less than the said predetermined safe stopping distance.

2. The safety device according to claim 1, wherein said reflecting elements, when distinguishable, specify said predetermined vehicle velocity.

3. The safety device according to claim 2, wherein said reflecting elements, when distinguishable, specify the predetermined vehicle velocity of 50 Km/Hr, and their reflecting elements are spaced apart a distance within the range of 2.75-4.00, preferably about 3.5 mm.

4. The safety device according to claim 1, wherein the safety device includes two or more reflecting means, each comprising a plurality of reflecting elements spaced from each other by spacing which corresponds to the resolving power of the eye at a predetermined distance each for different predetermined vehicle velocities, such that when the driver of the trailing vehicle is capable of distinguishing the reflecting elements of one of the two reflecting members, he is alerted that he is less than the predetermined safe stopping distance for the predetermined vehicle velocity.

5. The safety device according to claim 4, wherein the reflecting elements of one of said reflecting members specifies a predetermined velocity of 50 Km/Hr and the reflecting elements of that reflecting member are spaced apart a distance within the range of 2.75-4.00 mm, preferably about 3.5 mm; and the reflecting elements of at least one other reflecting member specify a predetermined vehicle velocity of 90 Km/Hr and their reflecting elements are spaced apart a distance within the range of 9-11 mm, preferably about 10.35 mm.

6. A safety device according to claim 1, wherein a distinguishable message or figure is created when the reflecting elements merge together at a distance greater than the safe stopping distance.

7. The safety device according to any one of claims 1-6, further including means for attaching the safety device to the rear end of a motor vehicle.

8. The device of claim 6, comprising one or more vehicle rear reflector members.

9. A motor vehicle including a safety device according to any one of claims 1-8 attached to the rear end of the vehicle.

10. A safety device for motor vehicles substantially as described with reference to and as illustrated in the accompanying drawings.

FIG 1

FIG 2

FIG 3

FIG 4b

FIG 4a

FIG 5

(a)　　　　　　　　　　(b)

# Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,P | DE-U-9 004 169  (PRODUCT CONSULT GESELLSCHAFT FÜR ENTWICKLUNG UND MARKETING MBH)<br>* the whole document * | 1-10 | B 60 Q 1/50 |
| X,A | US-A-4 245 888  (WARDEKI)<br>* abstract; figures 1-2 * | 1,2-10 | |
| X | FR-A-2 394 418  (DU CHAFFAUT)<br>* the whole document * | 1 | |

|  | TECHNICAL FIELDS SEARCHED (Int. Cl.5) |
|---|---|
| | B 60 Q<br>G 09 F |

The present search report has been drawn up for all claims

| Place of search | Date of completion of search | Examiner |
|---|---|---|
| The Hague | 12 June 91 | ONILLON C.G.A. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document